# EUROPÄISCHE PATENTSCHRIFT

(11) **EP 1 134 455 B1**
(45) Veröffentlichungstag und Bekanntmachung des Hinweises auf die Patenterteilung: **18.06.2003**
(21) Anmeldenummer: 01106590.1
(22) Anmeldetag: 15.03.2001
(51) Int. Cl.: F16H 25/22

(54) **Wälzkörpergewindetrieb mit radial eingesetztem Umlaufelement**
Rolling element screw drive with radially arranged rotating element
Entraînement à vis et corps de roulement avec un élément rotatif arrangé radialement

(30) Priorität: 16.03.2000 DE 10012810
(43) Veröffentlichungstag der Anmeldung: 19.09.2001
(73) Patentinhaber: Rexroth Star GmbH, 97424 Schweinfurt (DE)
(72) Erfinder: Greubel, Roland, 97729 Ramsthal (DE)
(74) Vertreter: Herzog, Markus, Dipl.-Phys. Dr.

(56) Entgegenhaltungen:
- GB-A- 806 811
- US-A- 5 791 192
- PATENT ABSTRACTS OF JAPAN vol. 1995, no. 10, 30. November 1995 (1995-11-30) & JP 07 174205 A (TOYOTA MOTOR CORP;OTHERS: 01), 11. Juli 1995 (1995-07-11)
- PATENT ABSTRACTS OF JAPAN vol. 014, no. 019 (M-919), 16. Januar 1990 (1990-01-16) & JP 01 261551 A (SONY CORP), 18. Oktober 1989 (1989-10-18)

## Beschreibung

Die Erfindung betrifft einen Wälzkörpergewindetrieb mit einer Gewindespindel und einer die Gewindespindel umschließenden Gewindemutter, wobei zwischen einer Außenumfangsfläche der Gewindespindel und einer Innenumfangsfläche der Gewindemutter ein schraubenförmig verlaufender Gewindekanal vorgesehen ist, wobei der Gewindekanal zusammen mit einem die beiden Endbereiche des Gewindekanals verbindenden Rückführkanal einen endlosen Umlaufkanal bildet, in dem eine endlose Reihe von Wälzkörpern aufgenommen ist, wobei jedem der beiden Endbereiche des Gewindekanals ein an der Gewindemutter gehaltenes Umlenkelement mit einem Umlenkkanal zugeordnet ist zum Überführen der Wälzkörper zwischen dem Gewindekanal und dem Rückführkanal bzw. zwischen dem Rückführkanal und dem Gewindekanal, und wobei wenigstens eine der Ausnehmungen zur Aufnahme der Umlenkelemente von der Außenumfangsfläche der Gewindemutter her in diese eingebracht und in beiden zur Längsachse der Gewindespindel im Wesentlichen parallel verlaufenden Richtungen durch die Gewindemutter begrenzt ist.

Ein derartiger Wälzkörpergewindetrieb ist beispielsweise aus der US-PS 2,166,106 bekannt. Nachteilig an dem in dieser Druckschrift gezeigten Wälzkörpergewindetrieb ist vor allem seine aufwendige Fertigung. So müssen zunächst der Durchgang für die Gewindespindel gefertigt und der Gewindemutter-seitige Teil des Gewindekanals in die Innenumfangsfläche der Gewindemutter eingebracht werden. Diese Bearbeitung der Gewindemutter erfolgt im Wesentlichen in axialer Richtung der Gewindemutter. Anschließend werden in einer Folge von im Wesentlichen in radialer Richtung durchgeführten Arbeitsschritten die Aufnahmen für die Umlenkelemente vorgesehen, indem man im Wesentlichen radial verlaufende Bohrungen in die Außenumfangsfläche der Gewindemutter einbringt. Darüber hinaus werden die Umlenkelemente des bekannten Wälzkörpergewindetriebs an der Gewindemutter durch Madenschrauben gesichert. Hierzu muss nach dem Einsetzen der Umlenkelemente in die Aufnahmebohrungen eine weitere Bohrung in die Gewindemutter eingebracht werden, welche sowohl die Begrenzungsfläche der Aufnahme als auch das darin eingesetzte Umlenkstück durchdringt. Schließlich muss in diese weitere Bohrung noch ein Innengewinde eingeschnitten werden.

Es ist daher Aufgabe der vorliegenden Erfindung, die Herstellung von Wälzkörpergewindetrieben der gattungsgemäßen Art zu vereinfachen.

Diese Aufgabe wird erfindungsgemäß durch einen Wälzkörpergewindetrieb der eingangs genannten Art gelöst, bei dem das wenigstens eine Umlenkelement von zur Längsachse der Gewindespindel im Wesentlichen parallel verlaufenden Befestigungsmitteln, vorzugsweise Befestigungsstiften, an der Gewindemutter festlegbar ist. Da erfindungsgemäß auch die Befestigungsmittel parallel zur Längsachse der Gewindespindel orientiert sind, können alle an der Gewindemutter durchzuführenden Fertigungsschritte in einer einzigen Aufspannung der Gewindemutter durchgeführt werden, nämlich einer eine axiale Bearbeitung der Gewindemutter ermöglichenden Aufspannung. Dies vereinfacht die Fertigung der Gewindemutter, was unter anderem die für den Herstellungsprozess benötigte Zeit verringert und so die Anzahl der pro Zeiteinheit gefertigten Gewindemuttern erhöht. Darüber hinaus wird die Genauigkeit erhöht, mit der die Gewindemutter hergestellt werden kann, da eine Veränderung der Spannsituation mit erneutem Einrichten des Werkstücks bei der Fertigung eines Bauteils eine der Haupteinflussgrößen für Ungenauigkeiten an den bearbeiteten Bauteilen darstellt. Gerade bei Wälzkörpergewindetrieben ist jedoch die Genauigkeit, mit der die einzelnen Elemente wie Gewindespindel und Gewindemutter hergestellt sind, entscheidend für die Lebensdauer der gemeinsam gebildeten Baugruppe.

Als Befestigungsmittel werden bevorzugt Befestigungsstifte verwendet, da diese als Aufnahme lediglich ein Sackloch bzw. eine Bohrung erfordern, die in nur einem einzigen Arbeitsgang in die Gewindemutter eingebracht werden kann. Grundsätzlich sind jedoch auch andere Befestigungsmittel, wie z.B. Schrauben an dem erfindungsgemäßen Wälzkörpergewindetrieb einsetzbar.

Eine einfache Herstellung des Umlenkelements wird ermöglicht, wenn wenigstens eines der Umlenkelemente aus wenigstens zwei Umlenkelement-Teilen zusammengesetzt ist, welche den Umlenkkanal gemeinsam begrenzen. Diese Umlenkelement-Teile können hinterschneidungsfrei konstruiert werden. Durch die damit einhergehende einfache Entformbarkeit der Umlenkelement-Teile ist es möglich, die Umlenkelement-Teile im Spritzgussverfahren herzustellen.

Das Umlenkelement kann weiterhin ein Umlenkelement-Hauptteil umfassen, welches beispielsweise der Befestigung des Umlenkelements an der Gewindemutter dient, sowie wenigstens ein Umlenkelement-Nebenteil. Bei dieser Gestaltung des Umlenkelements kann eine vorteilhafte Funktionstrennung im Umlenkelement vorgenommen werden. So kann das Umlenkelement-Hauptteil beanspruchungsgerecht so konstriert werden, dass es aus der Befestigung des Umlenkelements an der Gewindemutter herrührende Kräfte effektiv aufnehmen kann. Ebenso kann das Umlenkelement-Nebenteil besonders für die Führung von Wälzkörpern geeignet ausgebildet sein. Beispielsweise ermöglicht die geteilte Ausführung des Umlenkelements eine beanspruchungsgerechte Verwendung unterschiedlicher Werkstoffe für die genannten Umlenkelement-Teile.

Vorteilhafterweise kann das Umlenkelement-Hauptteil derart ausgebildet sein, dass die Befestigungsmittel das Umlenkelement-Hauptteil durchsetzen. Dies vereinfacht die Herstellung der Umlenkelemente weiter, da für ein Durchsetzen eines Bauteils einfach und in nur einem Arbeitsgang herzustellende Durchgangsöffnungen, wie z.B. Bohrungen, ausreichen.

Wenn wenigstens ein Umlenkelement-Nebenteil infolge der Befestigung des Umlenkelement-Hauptteils an der Gewindemutter von diesem Umlenkelement-Hauptteil an der Gewindemutter gehalten ist, so kann hierdurch das Umlenkelement-Nebenteil von allen Befestigungsfunktionen befreit werden und braucht dementsprechend nicht mit eigenen Befestigungsmitteln zur Befestigung an der Gewindemutter versehen zu werden. Dadurch werden die zur Herstellung des Umlenkelement-Nebenteils benötigten Arbeitsschritte verringert.

Es ist jedoch auch möglich, das Umlenkelement einstückig auszubilden, wobei der Umlenkkanal vollständig im Inneren des Umlenkelements verläuft. Auch in diesem Fall können die vorstehend genannten Vorteile bei der Befestigung des Umlenkelements erreicht werden, wenn ein Halteelement vorgesehen ist, welches das Umlenkelement in der Ausnehmung sichert. Aus den bereits genannten Gründen ist es dabei vorteilhaft, wenn die Befestigungsmittel das Halteelement durchsetzen.

Eine besonders einfache Herstellung eines gattungsgemäßen Wälzkörpergewindetriebs ist dann möglich, wenn die Ausnehmung zur Aufnahme von Umlenkstücken an der Gewindemutter zwei zur Längsachse der Gewindespindel im Wesentlichen orthogonal verlaufende Flächen sowie zur Längsachse der Gewindespindel im Wesentlichen parallele, konkave Flächen umfasst. Zwischen den im Wesentlichen orthogonal verlaufenden Flächen sowie zwischen den beiden konkaven Flächen ist eine Öffnung vorgesehen, durch die hindurch der schraubenförmig verlaufende Gewindekanal zugänglich ist. Eine derartige Ausnehmung lässt sich beispielsweise in einfacher Weise durch Fräsen herstellen, beispielsweise unter Einsatz eines Scheibenfräsers, wobei die den Fräser antreibende Bearbeitungsmaschinenspindel wiederum zur Längsachse der Gewindespindel des Wälzkörpergwindetriebs im Wesentlichen parallel verläuft. Obwohl die Ausnehmungen zur Aufnahme von Umlenkstücken üblicherweise von beiden Stirnseiten her bearbeitet werden, können sie dennoch, bspw. unter Einsatz einer um 180° drehbaren Spannvorrichtung in einer Aufspannung mit den in die Gewindemutter einzubringenden Bohrungen gefertigt werden, ohne dass dabei das Werkstück in der Spannvorrichtung neu einzurichten wäre. Da somit nicht nur die Befestigung der Umlenkelemente an der Gewindemutter in axialer Richtung erfolgen kann, sondern unabhängig davon auch die Aufnahmen für die Umlenkelemente in axialer Richtung in die Gewindemutter eingebracht werden können, wird für diesen Gedanken auch selbständiger Schutz angestrebt.

Nachzutragen ist noch, dass zur Herstellung der Aufnahmen für die Umlenkelemente zusätzlich oder alternativ zum Fräsen auch ein Schleifverfahren eingesetzt werden kann.

Je nach dem Werkzeug, mit dem die Gewindemutter des Wälzkörpergewindetriebs bearbeitet wird, kann es bei der Fertigung der Gewindemutter zu Kollisionen mit Werkzeug- oder/und Maschinenteilen kommen. Beispielsweise kann der Schaft des Scheibenfräsers mit der Außenumfangsfläche der Gewindemutter kollidieren, so dass der Scheibenfräser nicht tief genug in die Gewindemutter eindringen kann, um dort eine funktionsfähige Aufnahme zu erzeugen. Derartige Kollisionen, bei denen sowohl das eingesetzte Werkzeug als auch das Werkstück zerstört oder zumindest beschädigt werden kann, können beispielsweise dadurch verhindert werden, dass an der Gewindemutter Aussparungen für Werkzeug- bzw. Maschinenteile vorgesehen sind.

Die Gewindemutter kann beim Betrieb des Wälzkörpergewindetriebs auf einfache Art und Weise mit einem bewegbaren Bauteil, beispielsweise einem Schlitten oder einem Stempel, verbunden werden, wenn sie an wenigstens einem ihrer Längsenden einen Gewindeansatz aufweist.

Wie bereits zuvor erwähnt, können die Umlenkelement-Teile aus Kunststoff gefertigt, beispielsweise spritzgegossen, sein. Dies ermöglicht eine einfache und kostengünstige Herstellung der Umlenkelement-Teile bei gleichbleibend hoher Fertigungsgenauigkeit.

Weiterhin können die im Wälzkörpergewindetrieb eingesetzten Wälzkörper Kugeln sein. Kugeln werden in Wälzkörpergewindetrieben bevorzugt eingesetzt, da sie im Gegensatz zu anderen Wälzkörpern keine Vorzugswälzrichtung aufweisen, die bei der Konstruktion des Wälzkörperkanals zu berücksichtigen wäre.

Die vorliegende Erfindung wird im Folgenden anhand der beiliegenden Zeichnung näher erläutert werden. Es stellt dar:

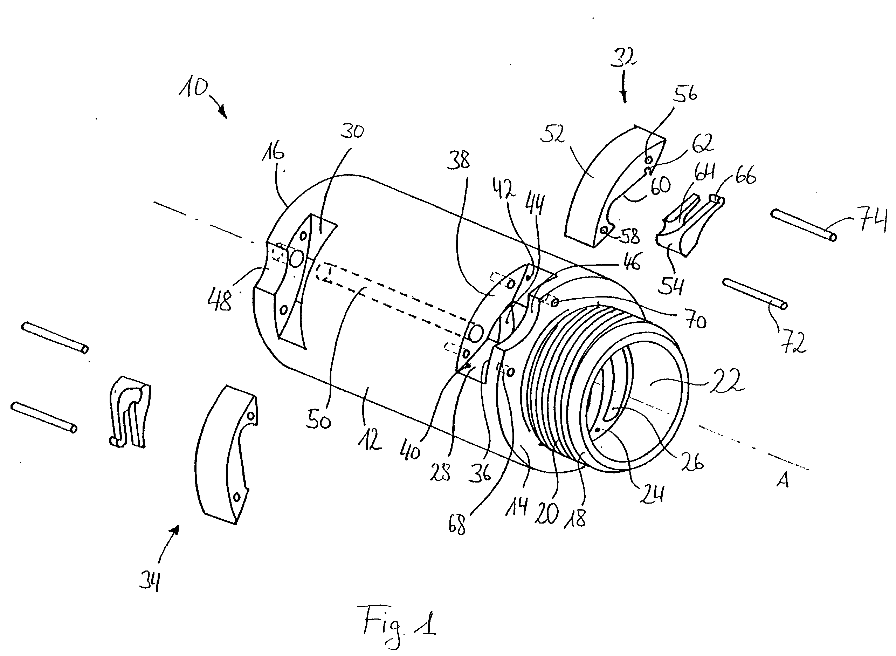

- Fig. 1: eine perspektivische Explosionsdarstellung einer Gewindemutter eines erfindungsgemäßen Wälzkörpergewindetriebs.

In Fig. 1 ist eine Gewindemutter eines erfindungsgemäßen Wälzkörpergewindetriebs allgemein mit 10 bezeichnet. Die Gewindemutter 10 ist als zur Achse A rotationssymmetrischer Kreiszylinder ausgebildet mit einer Außenumfangsfläche 12, einer vorderen Stirnseite 14 und einer hinteren, durch die perspektivische Darstellung verdeckten Stirnseite 16. An der vorderen Stirnseite 14 ist die Gewindemutter 10 integral mit einem sich in Richtung der Achse A erstreckenden Gewindeansatz 18 ausgebildet. Der Gewindeansatz 18 weist an seiner äußeren Mantelfläche ein Gewinde 20 auf.

Durch die Gewindemutter 10 hindurch erstreckt sich in Richtung der Achse A konzentrisch zu dieser eine Durchgangsbohrung 22, welche von einer Innenumfangsfläche 24 der Gewindemutter 10 in radialer Richtung begrenzt ist. An dieser Innenumfangsfläche 24 ist konzentrisch zur Achse A eine wendel- oder schraubenförmige Wälzkörperführungsbahn 26 vorgesehen und bildet zusammen mit einer komplementären Wälzkörperführungsbahn gleicher Gewindesteigung einer (nicht dargestellten) Gewindespindel, einen schraubenförmig verlaufenden Gewindekanal.

Die Gewindemutter 10 weist darüber hinaus eine vordere Ausnehmung 28 sowie eine hintere Ausnehmung 30 zur Aufnahme eines vorderen Umlenkelements 32 sowie eines hinteren Umlenkelements 34 auf. Die Ausnehmungen 28 und 30 sind von der Außenumfangsfläche 12 der Gewindemutter 10 her durch Fräsen mit einem Scheibenfräser in die Gewindemutter eingebracht. Bei der Fertigung der Ausnehmungen 28 und 30 befindet sich die Scheibenfräser-Spindelachse parallel zur Achse A, und der Scheibenfräser wird mit einer zur Achse A orthogonalen Vorschubrichtung in die Gewindemutter 10 zur spanenden Bearbeitung derselben verfahren.

Die vordere Ausnehmung 28 weist zwei zur Achse A im Wesentlichen orthogonal verlaufende Begrenzungsflächen auf, nämlich eine durch die perspektivische Darstellung verdeckte vordere Begrenzungsfläche 36 und eine hintere Begrenzungsfläche 38, und weist weiterhin zwischen diesen zwei die Begrenzungsflächen 36, 38 verbindende, zur Achse A parallel verlaufende Begrenzungsflächen auf, nämlich eine erste konkave Begrenzungsfläche 40 und eine zweite konkave Begrenzungsfläche 42. Die Begrenzungsflächen 36, 38 werden bei der Fertigung der vorderen Ausnehmung 28 von je einer Stirnfläche des Scheibenfräsers, die erste und zweite konkave Begrenzungsfläche 40 bzw. 42 von der Umfangsfläche des Scheibenfräsers erzeugt. Der Scheibenfräser wird bei der Herstellung der vorderen Ausnehmung 28 so weit in die Gewindemutter 10 verfahren, dass seine Umfangsfläche eine Manteldurchgangsöffnung 44 zur Verbindung der Ausnehmung 28 mit der Durchgangsbohrung 22 erzeugt. Die Manteldurchgangsöffnung 44 befindet sich somit zwischen den vorderen und hinteren Begrenzungsflächen 36 und 38 sowie zwischen den ersten und zweiten konkaven Begrenzungsflächen 40 und 42.

Die hintere Ausnehmung 30 ist bezüglich Gestalt und Herstellungsweise mit der vorderen Ausnehmung 28 im Wesentlichen identisch. Beide Ausnehmungen 28 und 30 werden somit sowohl in Richtung der Achse A als auch in Umfangsrichtung von der Gewindemutter 10 begrenzt.

Zur Vermeidung von Kollisionen mit dem Schaft des die Ausnehmungen 28 und 30 erzeugenden Scheibenfräsers sind an der Gewindemutter 10 konkave, kreissektorartige Materialaussparungen 46 und 48 vorgesehen. Die Materialaussparung 46 befindet sich zwischen der vorderen Stirnseite 14 der Gewindemutter 10 und der vorderen orthogonalen Begrenzungsfläche 36 der vorderen Ausnehmung 28. Die hintere Materialaussparung 48 befindet sich zwischen der hinteren orthogonalen Begrenzungsfläche der hinteren Ausnehmung 30 und der hinteren Stirnseite 16 der Gewindemutter 10.

In der Gewindemutter 10 ist weiterhin ein Rückführkanal 50 vorgesehen. Der Rückführkanal 50 ist wie die wendel- oder schraubenförmige Wälzkörperführungsbahn 26 Teil einer an einem erfindungsgemäßen Wälzkörpergewindetrieb ausgebildeten endlosen Wälzkörperführungsbahn. Der Rückführkanal 50 verläuft im Wesentlichen parallel zur Achse A von der hinteren orthogonalen Begrenzungsfläche 38 der vorderen Ausnehmung 28 zur vorderen orthogonalen Begrenzungsfläche der hinteren Ausnehmung 30. Bei der Herstellung des Rückführkanals 50 wird ein Bohrer von der hinteren Stirnseite 16 her parallel zur Richtung der Achse A in die Gewindemutter 10 vorgeschoben. Die Bohrerspindel ist dabei ebenfalls parallel zur Achse A angeordnet.

Der im erfindungsgemäßen Wälzkörpergewindetrieb ausgebildete endlose Wälzkörperumlaufkanal wird durch die in die vordere Ausnehmung 28 und die hintere Ausnehmung 30 einzusetzenden Umlenkelemente 32 und 34 vervollständigt. Die Umlenkelemente 32 und 34 sind identisch ausgebildet und werden lediglich um 180° zueinander verdreht in die Gewindemutter 10 eingesetzt. Im folgenden wird deshalb lediglich das Umlenkelement 32 beschrieben.

Das Umlenkelement 32 ist gebildet aus einem Umlenkelement-Hauptteil 52 sowie einem Umlenkelement-Nebenteil 54. Sowohl das Umlenkelement-Hauptteil 52 als auch das Umlenkelement-Nebenteil 54 sind aus Kunststoff in einem Spritzgussverfahren hergestellt.

Das Umlenkelement-Hauptteil 52 weist zwei Durchgangskanäle 56 und 58 auf, welche zur Befestigung des Umlenkelement-Hauptteils an der Gewindemutter 10 dienen. Weiterhin weist das Umlenkelement-Hauptteil an seiner betriebsmäßig zur Achse A hin weisenden Seite eine Einpass-Aussparung 60 auf, deren Kontur der äußeren Gestalt des Umlenkelement-Nebenteils 54 angepasst ist. In der in Fig. 1 gezeigten Ausführungsform ist weiterhin eine Haltenasenausnehmung 62 bezüglich einer zur Achse A orthogonalen Symmetrieebene des Umlenkelement-Hauptteils 52 in lediglich einer Hälfte des Umlenkelement-Hauptteils 52 als Teil der Einpass-Ausnehmung 60 derart vorgesehen, dass Einpass-Aussparung 60 und Haltenasenausnehmung 62 gemeinsam eine Ausnehmung an dem Umlenk-Hauptteil 52 bilden. Die Haltenasenausnehmung 62 kann sich jedoch auch über die gesamte Breite des Umlenkelement-Hauptteils 52 erstrecken.

Am Umlenkelement-Nebenteil 54 ist ein offener Umlenkkanal 64 derart ausgebildet, dass bei betriebsmäßiger Anordnung des Umlenkelements 32 an der Gewindemutter 10 das Umlenkelement-Hauptteil 52 und das Umlenkelement-Nebenteil 54 gemeinsam einen Wälzkörperumlenkkanal begrenzen. Dieser Wälzkörperumlenkkanal verbindet bei einem betriebsmäßig montierten Wälzkörpergewindetrieb einen vorderen Endbereich des Gewindekanals mit einem vorderen Endbereich des Rückführkanals 50. Ebenso verbindet ein Wälzkörperumlenkkanal im Umlenkelement 34 einen hinteren Endbereich des Rückführkanals 50 mit einem hinteren Endbereich des Gewindekanals der Gewindemutter 10. Am Umlenkelement-Nebenteil 54 ist an einem dem Gewindekanal näheren Ende ferner eine Haltenase 66 ausgebildet, die zum Eingriff in die Haltenasenausnehmung 62 bestimmt ist.

Die hier geschilderte, bevorzugte Ausführungsform eines Umlenkelements 32 begünstigt die Vormontierbarkeit von Umlenkelement-Hauptteil 52 und Umlenkelement-Nebenteil 54. Zur Vormontage der beiden Umlenkelement-Teile wird das Umlenkelement-Nebenteil 54 derart in die Einpass-Aussparung 60 des Umlenkelement-Hauptteils 52 eingepasst, dass die Haltenase 66 des Umlenkelement-Nebenteils 54 in der Haltenasenausnehmung 62 des Umlenkelement-Hauptteils 52 liegt. Das Umlenkelement-Nebenteil 54 wird am Umlenkelement-Hauptteil 52 über die Verbindung von Haltenase 66 und Haltenasenausnehmung 62 gehalten, so dass das Umlenkelement 32 vormontiert in die vordere Ausnehmung 28 der Gewindemutter eingesetzt werden kann.

Zur Anbringung des Umlenkelement-Teils 32 an der Gewindemutter 10 sind an der Gewindemutter 10 Sacklochbohrungen 68 und 70 vorgesehen. Die Sacklochbohrungen 68 und 70 verlaufen parallel zur Achse A von der vorderen Stirnseite 14 aus in die Gewindemutter 10 hinein und erstrecken sich über die hintere orthogonale Begrenzungsfläche 38 der vorderen Ausnehmung 28 hinaus. Zur Anbringung des Umlenkelements 32 an der Gewindemutter 10 wird das Umlenkelement 32, wie zuvor beschrieben, vormontiert in die vordere Ausnehmung 28 eingesetzt. Dabei fluchten die Sacklochbohrung 68 mit dem Durchgangskanal 58 am Umlenkelement-Hauptteil 52 und die Sacklochbohrung 70 mit dem Durchgangskanal 56. Befestigungsstifte 72 und 74 werden von der vorderen Stirnseite 14 her in die Sacklochbohrungen 68 und 70 derart eingeführt, dass sie das Umlenkelement-Hauptteil 52 durchsetzen.

Gemäß Vorstehendem können alle an der Gewindemutter 10 vorhandenen Bohrungen und Ausnehmungen spanabhebend mit gleichbleibender Ausrichtung der Werkzeugspindel hergestellt werden. Die Durchgangsbohrung 22, Materialaussparungen 46 und 48, der Rücklaufkanal 50 sowie die Sacklochbohrungen 68 und 70 und die Ausnehmungen 28 und 30 zur Aufnahme der Umlenkelemente 32 und 34 werden mit einer parallel zur Achse A verlaufenden Werkzeugspindel spanabhebend gefertigt. Die vordere und hintere Ausnehmung 28 bzw. 30 sowie die diesen zugeordneten Sacklochbohrungen werden üblicherweise von der vorderen bzw. hinteren Stirnseite her bearbeitet, d.h. mit gleicher Ausrichtung der Werkzeugspindel, jedoch mit um 180° gedrehtem Werkzeug. Unter Verwendung bspw. einer für derartige Bearbeitungen üblichen Fertigungszelle oder einer um 180° drehbaren Spannvorrichtung kann die Gewindemutter 10 in einer Aufspannung schnell und mit hoher Genauigkeit gefertigt werden. Ein erneutes Einrichten des Werkstücks an der Spannvorrichtung kann dementsprechend entfallen.

## Patentansprüche

1. Wälzkörpergewindetrieb mit einer Gewindespindel und einer die Gewindespindel umschließenden Gewindemutter (10),
wobei zwischen einer Außenumfangsfläche der Gewindespindel und einer Innenumfangsfläche (24) der Gewindemutter (10) ein schraubenförmig verlaufender Gewindekanal vorgesehen ist,
wobei der Gewindekanal zusammen mit einem die beiden Endbereiche des Gewindekanals verbindenden Rückführkanal (50) einen endlosen Umlaufkanal bildet, in dem eine endlose Reihe von Wälzkörpern aufgenommen ist,
wobei jedem der beiden Endbereiche des Gewindekanals ein an der Gewindemutter (10) gehaltenes Umlenkelement (32, 34) mit einem Umlenkkanal (64) zugeordnet ist zum Überführen der Wälzkörper zwischen dem Gewindekanal und dem Rückführkanal (50) bzw. zwischen dem Rückführkanal (50) und dem Gewindekanal, und
wobei wenigstens eine der Ausnehmungen (28, 30) zur Aufnahme der Umlenkelemente (32, 34) von der Außenumfangsfläche (12) der Gewindemutter (10) her in diese eingebracht und in beiden zur Längsachse (A) der Gewindespindel im Wesentlichen parallel verlaufenden Richtungen durch die Gewindemutter (10) begrenzt ist, **dadurch gekennzeichnet, dass** das wenigstens eine Umlenkelement (32, 34) mittels zur Längsachse (A) der Gewindespindel im Wesentlichen parallel verlaufender Befestigungsmittel (72, 74), vorzugsweise Befestigungsstiften (72, 74), an der Gewindemutter (10) festlegbar ist.

2. Wälzkörpergewindetrieb nach Anspruch 1,
**dadurch gekennzeichnet, dass** wenigstens eines der Umlenkelemente (32, 34) aus wenigstens zwei Umlenkelement-Teilen (52, 54) zusammengesetzt ist, welche den Umlenkkanal (64) gemeinsam begrenzen.

3. Wälzkörpergewindetrieb nach Anspruch 1 oder 2,
**dadurch gekennzeichnet, dass** wenigstens eines der Umlenkelemente (32, 34) ein Umlenkelement-Hauptteil (52) umfasst, welches beispielsweise der Befestigung des Umlenkelements (32) an der Gewindemutter (10) dient, sowie wenigstens ein Umlenkelement-Nebenteil (54).

4. Wälzkörpergewindetrieb nach Anspruch 3,
**dadurch gekennzeichnet, dass** die Befestigungsmittel (72, 74) das Umlenkelement-Hauptteil (52) durchsetzen.

5. Wälzkörpergewindetrieb nach Anspruch 3 oder 4,
**dadurch gekennzeichnet, dass** wenigstens ein Umlenkelement-Nebenteil (54) infolge der Befestigung des Umlenkelement-Hauptteils (52) an der Gewindemutter (10) von diesem Umlenkelement-Hauptteil (52) an der Gewindemutter (10) gehalten ist.

6. Wälzkörpergewindetrieb nach Anspruch 1,
**dadurch gekennzeichnet, dass** ein Halteelement vorgesehen ist, welches das Umlenkelement in der Ausnehmung sichert.

7. Wälzkörpergewindetrieb nach Anspruch 6,
**dadurch gekennzeichnet, dass** die Befestigungsmittel (72, 74) das Halteelement durchsetzen.

8. Wälzkörpergewindetrieb nach dem Oberbegriff des Anspruchs 1
**dadurch gekennzeichnet, dass** wenigstens eine der Ausnehmungen (28, 30) zwei zur Längsachse (A) der Gewindespindel im Wesentlichen orthogonal verlaufende Flächen (36, 38) sowie zwei zur Längsachse (A) der Gewindespindel im Wesentlichen parallele, konkave Flächen (40, 42) umfasst.

9. Wälzkörpergewindetrieb nach einem der vorhergehenden Ansprüche, **dadurch gekennzeichnet, dass** wenigstens eine der Ausnehmungen (28, 30) im Wesentlichen durch Fräsen, vorzugsweise unter Verwendung eines Scheibenfräsers, oder/und durch Schleifen hergestellt ist.

10. Wälzkörpergewindetrieb nach einem der vorhergehenden Ansprüche, **dadurch gekennzeichnet, dass** die Gewindemutter (10) Aussparungen (46, 48) zur Vermeidung von herstellungsbedingten Kollisionen mit Werkzeug- oder/und Maschinenteilen, beispielsweise dem Schaft des Scheibenfräsers, aufweist.

11. Wälzkörpergewindetrieb nach einem der vorhergehenden Ansprüche, **dadurch gekennzeichnet, dass** die Gewindemutter (10) an wenigstens einem ihrer Längsenden (14) einen Gewindeansatz (18) aufweist.

12. Wälzkörpergewindetrieb nach einem der vorhergehenden Ansprüche, **dadurch gekennzeichnet, dass** wenigstens eines der Umlenkelemente (32, 34) aus Kunststoff gefertigt, vorzugsweise spritzgegossen ist.

13. Wälzkörpergewindetrieb nach einem der vorhergehenden Ansprüche, **dadurch gekennzeichnet, dass** die Wälzkörper Kugeln sind.

## Claims

1. Rolling-body screw drive having a threaded spindle and a threaded nut (10) enclosing the threaded spindle,
it being the case that a helically running threaded channel is provided between an outer circumferential surface of the threaded spindle and an inner circumferential surface (24) of the threaded nut (10),
it being the case that the threaded channel forms, together with a return channel (50), which connects the two end regions of the threaded channel, an endless circulatory channel in which an endless series of rolling bodies is accommodated,
it being the case that each of the two end regions of the threaded channel is assigned a deflecting element (32, 34), which is retained on the threaded nut (10) and has a deflecting channel (64), for transferring the rolling bodies between the threaded channel and the return channel (50) and between the return channel (50) and the threaded channel, and
it being the case that at least one of the cutouts (28, 30) for accommodating the deflecting elements (32, 34) is introduced into the threaded nut (10) from the outer circumferential surface (12) of the same and is bounded by the threaded nut (10) in both directions running essentially parallel to the longitudinal axis (A) of the threaded spindle,
**characterized in that** the at least one deflecting element (32, 34) can be secured on the threaded nut (10) by fastening means (72, 74), preferably fastening pins (72, 74), running essentially parallel to the longitudinal axis (A) of the threaded spindle.

2. Rolling-body screw drive according to Claim 1, **characterized in that** at least one of the deflecting elements (32, 34) is made up of at least two deflecting-element parts (52, 54) which together bound the deflecting channel (64).

3. Rolling-body screw drive according to Claim 1 or 2, **characterized in that** at least one of the deflecting elements (32, 34) comprises a main deflecting-element part (52), which serves, for example, for the fastening of the deflecting element (32) on the threaded nut (10), and at least one secondary deflecting-element part (54).

4. Rolling-body screw drive according to Claim 3, **characterized in that** the fastening means (72, 74) pass through the main deflecting-element part (52).

5. Rolling-body screw drive according to Claim 3 or 4, **characterized in that**, as a result of the fastening of the main deflecting-element part (52) on the threaded nut (10), at least one secondary deflecting-element part (54) is retained on the threaded nut (10) by said main deflecting-element part (52).

6. Rolling-body screw drive according to Claim 1, **characterized in that** there is provided a retaining element which secures the deflecting element in the cutout.

7. Rolling-body screw drive according to Claim 6, **characterized in that** the fastening means (72, 74) pass through the retaining element.

8. Rolling-body screw drive according to the preamble of Claim 1, **characterized in that** at least one of the cutouts (28, 30) comprises two surfaces (36, 38) running essentially orthogonally to the longitudinal axis (A) of the threaded spindle and two concave surfaces (40, 42) which are essentially parallel to the longitudinal axis (A) of the threaded spindle.

9. Rolling-body screw drive according to one of the preceding claims, **characterized in that** at least one of the cutouts (28, 30) is produced essentially by milling, preferably using a side-milling cutter, and/or by grinding.

10. Rolling-body screw drive according to one of the preceding claims, **characterized in that** the threaded nut (10) has recesses (46, 48) for avoiding production-induced collisions with tool and/or machine parts, for example the shank of the side-milling cutter.

11. Rolling-body screw drive according to one of the preceding claims, **characterized in that** the threaded nut (10) has a threaded extension (18) at at least one of its longitudinal ends (14).

12. Rolling-body screw drive according to one of the preceding claims, **characterized in that** at least one of the deflecting elements (32, 34) is produced, preferably injection moulded, from plastic.

13. Rolling-body screw drive according to one of the preceding claims, **characterized in that** the rolling bodies are balls.

## Revendications

1. Mécanisme à vis et corps de roulement comportant une broche à vis et un écrou de vis (10) enfermant la broche à vis,
dans lequel un canal de vis s'étendant en hélice est prévu entre une surface périphérique extérieure de la broche à vis et une surface périphérique intérieure (24) de l'écrou de vis (10),
dans lequel le canal de vis forme avec un canal de retour (50), reliant les deux zones terminales du canal de vis, un canal de circulation sans fin dans lequel est logée une série sans fin de corps de roulement,
dans lequel à chacune des deux zones terminales du canal de vis est associé un élément de renvoi (32, 34), fixé à l'écrou de vis (10), avec un canal de renvoi (64), pour le transfert des corps de roulement entre le canal de vis et le canal de retour (50) ou entre le canal de retour (50) et le canal de vis, et
dans lequel au moins l'un des évidements (28, 30) destinés à recevoir les éléments de renvoi (32, 34) est introduit dans l'écrou de vis (10), à partir de la surface périphérique extérieure (12) de celui-ci, et est limité par l'écrou de vis (10), dans les deux sens s'étendant sensiblement parallèlement à l'axe longitudinal (A) de la broche à vis,
**caractérisé en ce qu'**au moins un élément de renvoi (32, 34) peut être fixé à l'écrou de vis (10), à l'aide de moyens de fixation (72, 74), de préférence de broches de fixation (72, 74), s'étendant sensiblement parallèlement à l'axe longitudinal (A) de la broche à vis.

2. Mécanisme à vis et à corps de roulement selon la revendication 1,
**caractérisé en ce qu'**au moins l'un des éléments de renvoi (32, 34) est constitué d'au moins deux parties d'élément de renvoi (52, 54), lesquelles limitent ensemble le canal de renvoi (64).

3. Mécanisme à vis et à corps de roulement selon la revendication 1 ou 2,
**caractérisé en ce qu'**au moins l'un des éléments de renvoi (32, 34) comprend une partie principale d'élément de renvoi (52) qui sert par exemple à la fixation de l'élément de renvoi (32) sur l'écrou de vis (10), ainsi qu'au moins une partie secondaire d'élément de renvoi (54).

4. Mécanisme à vis et à corps de roulement selon la revendication 3,
**caractérisé en ce que** les moyens de fixation (72, 74) traversent la partie principale (52) de l'élément de renvoi.

5. Mécanisme à vis et à corps de roulement selon la revendication 3 ou 4,
**caractérisé en ce qu'**au moins une partie secondaire d'élément de renvoi (54) est maintenue par la partie principale d'élément de renvoi (52) sur l'écrou de vis (10), par suite de la fixation de la partie principale d'élément de renvoi (52) sur l'écrou de vis (10).

6. Mécanisme à vis et à corps de roulement selon la revendication 1,
**caractérisé en ce qu'**il est prévu un élément de maintien qui bloque l'élément de renvoi dans l'évidement.

7. Mécanisme à vis et à corps de roulement selon la revendication 6,
**caractérisé en ce que** les moyens de fixation (72, 74) traversent l'élément de maintien.

8. Mécanisme à vis et à corps de roulement selon le préambule de la revendication 1,
**caractérisé en ce qu'**au moins l'un des évidements (28, 30) comprend deux surfaces (36, 38), s'étendant sensiblement orthogonalement à l'axe longitudinal (A) de la broche (10), ainsi que deux surfaces concaves (40, 42) sensiblement parallèles à l'axe longitudinal (A) de la broche à vis.

9. Mécanisme à vis et à corps de roulement selon l'une des revendications précédentes,
**caractérisé en ce qu'**au moins l'un des évidements (28, 30) est réalisé essentiellement par fraisage, de préférence par utilisation d'une fraise à disque ou/et par meulage.

10. Mécanisme à vis et à corps de roulement selon l'une des revendications précédentes,
**caractérisé en ce que** l'écrou de vis (10) présente des découpes (46, 48) pour éviter des collisions, causées par la fabrication, avec des parties d'outil et/ou des parties de machine, par exemple avec la tige de la fraise à disque.

11. Mécanisme à vis et à corps de roulement selon l'une des revendications précédentes,
**caractérisé en ce que** l'écrou de vis (10) présente un bout fileté (18) sur au moins l'une des extrémités (14) de sa longueur.

12. Mécanisme à vis et à corps de roulement selon l'une des revendications précédentes,
**caractérisé en ce qu'**au moins l'un des éléments de renvoi (32, 34) est fabriqué en matière plastique, de préférence moulé par injection.

13. Mécanisme à vis et à corps de roulement selon l'une des revendications précédentes,
**caractérisé en ce que** les corps de roulement sont des billes.
